# FASCICULE DE BREVET EUROPEEN

(11) **EP 0 549 402 B1**
(45) Date de publication et mention de la délivrance du brevet: **27.09.1995**
(21) Numéro de dépôt: 92403389.7
(22) Date de dépôt: 14.12.1992
(51) Int. Cl.: F02K 1/82, G10K 11/16

(54) **Système d'amortissement des instabilités de combustion haute fréquence dans une chambre de combustion**
Vorrichtung zum Dämpfen der Hochfrequenzverbrennungsinstabilitäten in einer Brennkammer
System for damping high frequency combustion instabilities in a combustion chamber

(30) Priorité: 20.12.1991 FR 9115944
(43) Date de publication de la demande: 30.06.1993
(73) Titulaire: SOCIETE EUROPEENNE DE PROPULSION, 92150 Suresnes (FR)
(72) Inventeur: Huck, André M., F-27950 Saint Just (FR); Kernilis, Alain M., F-75009 Paris (FR); Druart, Jean-Paul, F-27940 Notre Dame de L'Isle (FR); Dorville, Georges J., F-76000 Rouen (FR)
(74) Mandataire: Thévenet, Jean-Bruno

(56) Documents cités:
- FR-A- 2 356 820
- FR-A- 2 376 994
- GB-A- 2 090 334
- US-A- 4 100 993

## Description

### Domaine de l'invention :

La présente invention concerne un système d'amortissement des instabilités de combustion haute fréquence dans une chambre de combustion, notamment de moteur-fusée, à partir d'au moins une cavité acoustique résonnante mise en communication avec la chambre de combustion.

Des instabilités de combustion sont susceptibles de se produire dans tous types de chambres de combustion dans lesquelles se produisent de forts dégagements de chaleur, mais sont particulièrement critiques dans le cas de chambres de combustion de moteurs-fusées.

Les instabilités de combustion ont pour conséquence principale la destruction de la couche limite d'écoulement qui est normalement créée au voisinage des parois internes d'une chambre de combustion, et qui leur assure de plus un rôle protecteur. Ladite destruction de la couche limite entraîne l'élévation anormale de la température des parois de la chambre, et la destruction progressive de l'injecteur et de la chambre par brûlage.

Les instabilités haute fréquence transmettent de plus, à l'intérieur de l'ensemble propulsif, des vibrations susceptibles de détériorer certains organes.

### Art antérieur

Il a déjà été proposé de réduire les instabilités dans les chambres de combustion de moteurs-fusées, à l'aide de cavités acoustiques résonnantes.

On connaît ainsi, par le document FR-A-2 570 129, un dispositif d'amortissement des vibrations à l'intérieur de la chambre de combustion de moteurs-fusées à propergols liquides, ce dispositif d'amortissement étant constitué par un ensemble de cavités en forme de flacons, disposées dans le fond de la chambre de combustion, entre les injecteurs, à l'intérieur même de la tête d'injection, et communiquant avec l'intérieur de la chambre de combustion par des canaux débouchant entre les orifices de sortie des injecteurs.

Un tel dispositif, qui vise à agir au plus près des injecteurs, ne permet pas de remédier efficacement à tous les phénomènes d'instabilités se produisant dans une chambre de combustion, et surtout implique la mise en oeuvre d'un grand nombre de chambres d'amortissement de volume important, du type fonctionnant en résonateur de Helmholtz, ce qui rend plus complexe et coûteuse la réalisation de la tête d'injection, tend à accroître les dimensions de celle-ci et rend difficile une adaptation à des chambres de combustion préexistantes dans la mesure où l'ensemble de la tête d'injection est à réétudier.

On a également proposé de mettre en oeuvre des cavités acoustiques résonnantes, de volume relativement important, notamment du type résonateur de Helmloltz, en dehors de la tête d'injection, mais au plus près de celle-ci. Le volume important des cavités conduit cependant à des difficultés de mise en place pratique.

Il est également connu d'installer à l'intérieur de la chambre de combustion des dispositifs d'absorption acoustique constitués par une chemise cylindrique percée d'orifices répartis sur toute la chemise, de façon à réaliser une double paroi tout autour de la chambre de combustion, les gaz de combustion pouvant pénétrer par les orifices derrière la chemise pour constituer un système oscillant capable d'amortir des instabilités de combustion.

De telles chemises sont cependant assez délicates et coûteuses à mettre en oeuvre, leurs caractéristiques doivent être définies essentiellement de façon empirique pour chaque type de chambre de combustion et il est difficile de concevoir de telles chemises de telle façon qu'elles soient adaptées à l'amortissement de toutes les fréquences de vibration d'amplitude significative identifiées susceptibles d'apparaître en cours de fonctionnement.

Enfin il a encore été proposé de mettre en oeuvre des cavités acoustiques résonnantes du type résonateurs quart d'onde présentant la forme de tubes. L'action localisée de telles cavités ne permet pas de supprimer ou amortir efficacement toutes les vibrations par suite de rotations des zones constituant des ventres de pression, et les modes de vibration tangentiels ne sont pas correctement amortis.

### Objet et description succincte de l'invention

L'invention vise à permettre une atténuation ou une élimination efficace des instabilités de combustion haute fréquence dans une chambre de combustion, notamment de moteur-fusée, sans accroître de façon sensible la masse ou l'encombrement de la chambre de combustion et sans imposer de modification substantielle de la technologique de fabrication des chambres de combustion existantes.

L'invention vise encore à permettre d'agir de façon précise et efficace simultanément sur plusieurs fréquences de vibrations à amortir tout en offrant une certaine liberté dans la mise en oeuvre pratique des moyens d'amortissement.

Ces buts sont atteints grâce à un système d'amortissement des instabilités de combustion haute fréquence dans une chambre de combustion, caractérisé en ce qu'il comprend au moins une cavité acoustique résonnante disposée autour de la chambre de combustion et présentant une géométrie et des dimensions telles qu'elle fonctionne simultanément en résonateur quart d'onde et en couplage tangentiel, permettant l'amortissement à la fois des ondes de pression longitudinales, des ondes de pression radiales, des ondes de pression tangentielles, et des combinaisons de ces divers types d'ondes.

De façon plus spécifique, selon l'invention, la cavité acoustique résonnante fonctionnant en résonateur quart d'onde et en couplage tangentiel comprend :
a) une partie principale annulaire dont la section par un demi-plan axial présente une forme très allongée avec une dimension transversale "e" qui est très petite vis-à-vis de la dimension longitudinale "L₁" qui s'étend elle-même sensiblement parallèlement à l'axe de symétrie de la chambre de combustion, le rayon moyen "R" de la partie principale annulaire étant voisin du rayon équivalent des modes de vibration à amortir, et
b) une partie annulaire de communication qui prend naissance dans la partie principale annulaire et débouche dans la chambre de combustion à proximité d'un ventre de pression longitudinal ou radial, la partie annulaire de communication présentant, en section par un demi-plan axial une longueur "L₂", et une dimension transversale "h" très inférieure à la somme de la dimension longitudinale "L₁" de la partie principale annulaire et de la longueur "L₂" de la partie annulaire de communication.

En pratique, la dimension transversale "e" de la partie principale annulaire et la dimension transversale "h" de la partie annulaire de communication de la cavité acoustique résonnante peuvent être comprises entre environ quelques dixièmes de millimètre et une dizaine de millimètres.

Dans tous les cas la dimension transversale "e" est très inférieure à la longueur de la partie principale annulaire et par suite également très inférieure à la longueur d'onde de vibrations à amortir auxquelles est adaptée la cavité acoustique.

L'invention permet d'amortir des vibrations dont les fréquences sont comprises entre quelques centaines de hertz et une dizaine de kilohertz.

La présence d'une partie principale annulaire permet d'assurer un amortissement des modes tangentiels, mais n'empêche pas la possibilité d'amortir des vibrations de fréquences différentes, soit par la mise en oeuvre de cavités multiples, soit pas la réalisation de portions de longueur variable au sein d'une même cavité annulaire.

Ainsi, selon un mode particulier de réalisation, la partie principale annulaire présente sur le pourtour de la chambre de combustion des portions de longueurs différentes correspondant à des fréquences d'amortissement différentes, la paroi de fond opposée à la zone dans laquelle prend naissance la partie annulaire de communication étant située à des distances différentes de ladite partie annulaire de communication, mais avec une distance minimale pour permettre un amortissement en couplage tangentiel.

Dans ce cas, selon une réalisation plus spécifique, ladite paroi de fond opposée à la zone dans laquelle prend naissance la partie annulaire de communication présente une évolution en marches d'escaliers.

Selon une autre réalisation spécifique, ladite paroi de fond opposée à la zone dans laquelle prend naissance la partie annulaire de communication présente une évolution alternative dont l'allure est sinusoïdale ou en dent de scie.

Le système d'amortissement selon l'invention, peut comprendre plusieurs cavités acoustiques résonnantes adaptées à différentes vibrations, comprenant plusieurs parties principales annulaires coaxiales débouchant dans des parties annulaires de communication présentant au moins une portion commune débouchant dans la chambre de combustion.

Le système d'amortissement peut encore comprendre plusieurs cavités acoustiques résonnantes adaptées à différentes vibrations, comprenant des parties annulaires de communication débouchant à divers niveaux de la chambre de combustion.

Pour chaque cavité acoustique résonnante, la partie annulaire de communication peut prendre naissance dans une zone située soit dans la partie d'extrémité supérieure, soit dans la partie d'extrémité inférieure de la partie principale annulaire.

La partie annulaire de communication peut elle-même déboucher dans la chambre de combustion par une fente circulaire formée sur tout le pourtour de la chambre ou par une fente circulaire discontinue située dans un plan perpendiculaire à l'axe de la chambre de combustion.

Avantageusement, la partie principale annulaire présente, en section par un demi-plan axial, sensiblement la forme d'un rectangle très allongé quelle que soit sa configuration, il est possible d'associer à la cavité acoustique des canaux de refroidissement qui longent celle-ci.

Un système d'amortissement selon l'invention peut être réalisé de façon particulièrement simple et efficace en mettant en oeuvre une cavité acoustique annulaire dont la partie principale annulaire est située derrière le col de la tuyère et présente un rayon "R" sensiblement égal au rayon "Ro" de la chambre de combustion.

La partie annulaire de communication débouche avantageusement dans la chambre de combustion au niveau du quart supérieur de la partie formant le col de la tuyère.

Selon un mode particulier de réalisation qui est particulièrement simple à mettre en oeuvre et n'accroît pas l'encombrement, la partie annulaire de communication est constituée par une fente continue ménagée entre un insert inférieur principal et un insert supérieur secondaire définissant le col de la tuyère et la partie principale annulaire est située entre la face extérieure de l'insert inférieure principal et la face intérieure de la paroi qui délimitent la chambre de combustion et sur laquelle sont rapportés lesdits insert inférieur principal et insert supérieur secondaire

Selon un autre mode particulier de réalisation également d'une mise en oeuvre très simple la partie annulaire de communication est constituée par une fente discontinue ménagée sur le pourtour de la chambre de combustion dans un insert unique monobloc définissant le col de la tuyère et la partie principale annulaire est située entre la face extérieure dudit insert unique monobloc et la face intérieure de la paroi qui délimite la chambre de combustion et sur laquelle est rapporté ledit insert unique monobloc.

Dans le cadre d'un moteur-fusée dont la tuyère est refroidie par des canaux de refroidissement parallèles verticaux ou hélicoïdaux, le système d'amortissement selon l'invention peut être facilement mis en oeuvre sous la forme d'une couronne cylindrique rapportée autour de la tuyère pour définir une cavité acoustique résonnante. La partie annulaire de communication de la cavité acoustique peut alors déboucher dans la chambre de combustion à travers une série de fentes formées dans la paroi de la tuyère entre les canaux de refroidissement.

Dans le cas d'un moteur-fusée dont la tuyère est formée à partir de tubes de refroidissement soudés ou brasés, le système d'amortissement selon l'invention peut également être facilement mis en oeuvre sous la forme d'une couronne cylindrique rapportée autour de la tuyère pour définir une cavité acoustique résonnante. La partie annulaire de communication peut alors déboucher dans la chambre de combustion à travers une série de passages constitués par des parties rétreintes des tubes constituant la paroi de la tuyère.

Dans les deux modes de réalisation précités, la couronne cylindrique rapportée peut être formée de plusieurs secteurs assemblés par soudure.

Chaque cavité acoustique résonnante du type résonateur quart d'onde est le siège d'ondes stationnaires et absorbe de l'énergie des vibrations à amortir sous la forme d'un frottement visqueux conduisant à un dégagement de chaleur qui accroît un peu la température des parois, au-delà de celle qui résulterait du seul apport calorifique des gaz de combustion.

Un circuit de refroidissement peut ainsi être utilement adjoint à la cavité acoustique résonnante, et peut être facilement réalisé, en particulier lorsque la cavité est réalisée sous la forme d'une couronne cylindrique rapportée.

Dans le cas d'un moteur-fusée dont la tuyère est réalisée en deux parties raccordée par des brides, la cavité acoustique résonnante peut être délimitée par des parois appartenant respectivement à chacune des deux parties constitutives de la tuyère. Dans ce cas, la cavité acoustique résonnante est refroidie au moyen de canaux de refroidissement appartenant respectivement à chacune des deux parties constitutives de la tuyère et mis en communication avec des canaux de refroidissement de la paroi de la tuyère.

Selon un mode particulier de réalisation possible, la partie principale annulaire de la cavité acoustique résonnante est aménagée entre un renflement de la paroi de la tuyère et une cloison située du côté de la chambre de combustion, des moyens sont prévus pour refroidir à l'aide d'un film d'ergol ladite cloison sur la face opposée à celle délimitant la partie principale annulaire et la partie annulaire de communication prend naissance dans une zone située dans la partie inférieure de la partie principale annulaire.

### Brève description des dessins

D'autres caractéristiques et avantages de l'invention ressortiront de la description suivante de modes particuliers de réalisation, donnés à titre d'exemples non limitatifs, en référence aux dessins annexés, sur lesquels :
- la figure 1 est une vue en demi-coupe axiale d'une partie de tuyère de moteur-fusée dont le col est défini par un insert et qui est équipée d'une cavité acoustique résonnante selon un premier mode de réalisation de l'invention.
- la figure 1A est une vue partielle de la figure 1 montrant une variante de réalisation de la cavité acoustique résonnante,
- les figures 2 et 3 sont des vues schématiques en demi-coupe axiale d'une chambre de combustion montrant deux configurations possibles de cavités acoustiques résonnantes selon l'invention, la partie principale de la cavité étant respectivement située au-dessous et au-dessus du canal de communication avec la chambre de combustion,
- les figures 2a et 3a sont des vues schématiques en demi-coupe axiale d'une chambre de combustion montrant des variantes de réalisation des cavités acoustiques résonnantes des figures 2 et 3 avec respectivement une partie principale annulaire de cavité qui n'est pas strictement parallèle à l'axe de la chambre, et une partie annulaire de communication qui s'écarte d'un plan radial perpendiculaire à l'axe de la chambre.
- la figures 4 à 6 montrent divers agencements de systèmes d'amortissement selon l'invention comprenant plusieurs cavités acoustiques résonnantes coopérant avec une chambre de combustion de moteur-fusée, vue en demi-coupe axiale,
- la figure 7 est une vue analogue à celle de la figure 1, correspondant à une variante de réalisation dans laquelle la cavité acoustique débouche dans la chambre de combustion par une fente discontinue,
- la figure 8 est une vue en demi-coupe axiale d'une tuyère de moteur-fusée réalisée en deux parties raccordées par des brides et munie d'une cavité acoustique refroidie interposée entre les deux parties constitutives de la tuyère,
- la figure 9 est une vue de demi-coupe axiale d'une tuyère de moteur-fusée refroidie par canaux, équipée d'une couronne cylindrique rapportée constituant une cavité acoustique annulaire selon l'invention.
- la figure 9A montre un détail de réalisation selon la section IXA-IXA de la figure 9,
- la figure 10 est une vue en demi-coupe axiale d'une tuyère de moteur-fusée constituée à partir de tubes de refroidissement soudés, équipée d'une couronne cylindrique rapportée constituant une cavité acoustique annulaire selon l'invention et munie de moyens de refroidissement,
- la figure 11 est une vue en demi-coupe axiale d'une tuyère de moteur-fusée, munie d'une cavité acoustique aménagée entre un renflement de la paroi de la tuyère et une cloison interne à la chambre de combustion,
- la figure 12 est une demi-vue en perspective avec arrachement, d'une tuyère de moteur-fusée, dont le col est défini par un insert et qui est équipée d'une cavité acoustique annulaire de hauteur variable étagée,
- la figure 13 est une demi-vue en perspective avec arrachement d'une tuyère de moteur-fusée, dont le col est défini par un insert et qui est équipée d'une cavité acoustique annulaire de hauteur variable selon une loi d'allure sinusoïdale,
- les figures 14 et 15 sont des diagrammes représentant l'étagement des variations relatives de pression respectivement pour une chambre de combustion équipée d'un système d'amortissement selon l'invention, et pour une chambre de combustion dépourvue d'un tel système, à partir d'une modélisation avec des vibrations de couplage selon un premier mode tangentiel et un premier mode longitudinal,
- les figures 16 et 17 sont des diagrammes représentant l'étagement des variations relatives de pression respectivement pour une chambre de combustion équipée d'un système d'amortissement selon l'invention, et pour une chambre de combustion dépourvue d'un tel système, à partir d'une modélisation avec des vibrations de couplage selon un troisième mode longitudinal.

### Description détaillée de modes particuliers de réalisation

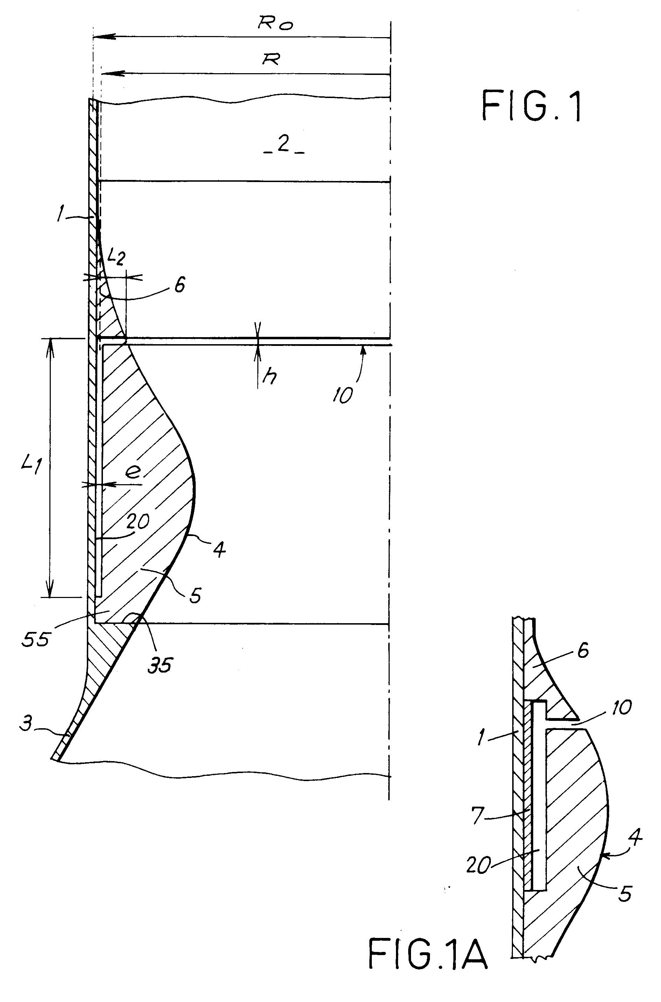

On a représenté sur la figure 1 une tuyère de moteur-fusée comprenant une paroi extérieure 1 qui délimite la chambre de combustion 2, se prolonge vers le bas autour de la partie correspondant au col 4 de la tuyère et constitue dans la partie la plus en aval le divergent 3 de la tuyère.

Un insert principal 5, constitué par une pièce de révolution, qui peut être métallique ou en matériaux composites ou céramiques, est rapporté à l'intérieur de la paroi cylindrique 1 de la tuyère pour définir le col 4 de la tuyère à travers lequel sont éjectés les gaz chauds en direction du cône d'éjection ou divergent 3.

L'insert principal 5 présente à sa partie inférieure extérieure une couronne de centrage 55 qui vient reposer sur un épaulement 35 formé par la paroi 1 de la chambre de combustion à la partie supérieure du divergent 3. La couronne de centrage 55 en contact avec la paroi 1 est en saillie d'une distance "e" par rapport à la face cylindrique externe de l'insert principal 5 de sorte qu'une cavité annulaire 20 définie par deux surfaces cylindriques coaxiales est formée entre l'insert principal 4 et la paroi externe 1 de la tuyère.

Un insert additionnel 6 constitué également par une pièce de révolution est rapporté, par exemple par soudage ou collage, à l'intérieur de la paroi 1 de la chambre de combustion 2 pour définir une partie convergente entre la partie sensiblement cylindrique de la paroi 1 de la chambre de combustion 2 et le col 4 de la tuyère défini par l'insert principal 5. Une fente annulaire continue 10, dont l'inclinaison peut être quelconque par rapport à l'axe de la tuyère, mais qui débouche dans la chambre de combustion 2 à proximité d'un ventre de pression longitudinal ou radial, est ménagée entre l'insert principal 5 et l'insert additionnel 6. La fente annulaire 10, qui présente une largeur h calibrée et une longueur L₂ dans un sens transversal par rapport à la tuyère, prend naissance dans la partie principale annulaire 20 de la cavité ménagée derrière l'insert principal 5, pour assurer une communication entre cette partie principale annulaire 20 et la chambre de combustion 2.

La fente annulaire de communication 10, dans l'exemple de la figure 1, prend naissance à l'extrémité supérieure de la partie principale annulaire 20, et débouche dans la chambre de combustion 2 au niveau du quart supérieur de l'ensemble des inserts 5,6 définissant le col 4 de la tuyère.

La réalisation d'une cavité acoustique résonnante 10,20 disposée au niveau du col 4 d'une tuyère, entre une paroi extérieure 1 et un ou plusieurs inserts 5,6, est particulièrement simple et n'augmente ni l'encombrement, ni la masse de l'ensemble propulsif.

La partie principale annulaire 20 de la cavité acoustique, dont la section par un demi-plan axial présente, comme représenté sur la figure 1, une forme très allongée, essentiellement rectangulaire, avec une dimension transversale e très petite vis-à-vis de la dimension longitudinale L₁, présente dans le cas de la figure 1 un rayon moyen R légèrement inférieur au rayon Ro de la paroi 1 de la chambre de combustion 2.

La cavité acoustique résonnante 10,20 de la figure 1 est ainsi bien adaptée à l'amortissement de modes de vibration dont le rayon équivalent est voisin de celui de la paroi 1 de la chambre de combustion 2.

La longueur totale L du profil de la cavité 10,20 qui correspond à la somme des longueurs L₁ et L₂ des lignes médianes des sections par un plan axial respectivement de la partie principale annulaire 20 et de la fente annulaire de communication 10, dépend essentiellement de la valeur des fréquences de vibration à amortir.

Les fréquences des vibrations correspondant aux instabilités de combustion à amortir peuvent être comprises entre quelques centaines de hertz et une dizaine de kilohertz.

La largeur e de la partie principale annulaire 20 et la largeur h de la fente de communication 10 sont dans tous les cas très inférieures à la longueur totale L et peuvent être comprises entre environ quelques dixièmes de millimètre et une dizaine de millimètres.

Ces valeurs correspondent à celles qui existent en fonctionnement sous la pression des gaz chauds et peuvent ne pas être tout à fait constantes.

Selon une caractéristique essentielle de l'invention, la cavité acoustique résonnante 10,20 présente des caractéristiques géométriques et dimensionnelles telles qu'elle constitue un résonateur quart d'onde, tout en assurant, par la configuration annulaire, un couplage tangentiel.

La figure 1A montre une variante de réalisation, dans laquelle une entretoise 7 est disposée contre la paroi de la chambre de combustion pour garantir le maintien d'un écartement prédéterminé entre l'insert principal 5 et l'insert additionnel 6 qui définissent à la fois le col 4 de la tuyère et les caractéristiques géométriques de la cavité acoustique 10,20.

Sur la figure 1A, on a également représenté une fente circulaire de communication 10 qui, ne prend pas naissance à la partie supérieure extrême de la partie principale 20 de la cavité, créant ainsi deux cavités résonnantes de longueurs différentes.

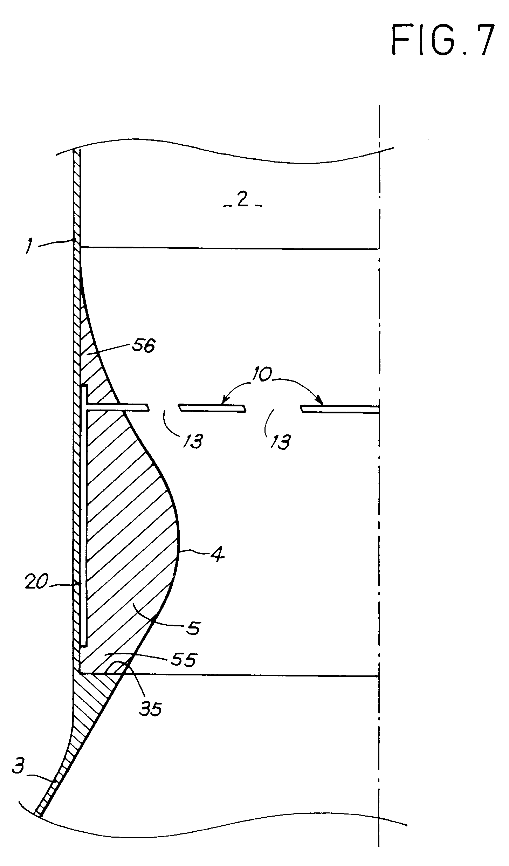

La figure 7 montre un mode de réalisation très voisin de celui des figure 1 et 1A, mais dans lequel un insert unique 5, métallique ou en matériau composite, est rapporté à l'intérieur de la paroi 1 de la chambre de combustion 2 pour définir à la fois le col 4 et la cavité acoustique 10,20. Les parties supérieure 56 et inférieure 55 de l'insert 5 constituent des moyens de centrage de cet insert par rapport à la paroi 1 tandis que la partie centrale de l'insert 5 définit, par sa face cylindrique externe de rayon légèrement inférieur à celui de la paroi 1, la partie principale annulaire 20 de la cavité acoustique 10,20.

Dans le cas de la figure 7, la fente circulaire 10 de communication entre la cavité acoustique et la chambre de combustion est discontinue et interrompue par des portions 13 non débouchantes.

L'invention prend en effet en compte aussi bien le cas de fentes circulaires débouchantes 10 formées sur tout le pourtour de la chambre de combustion 2 (figure 1) que des parties annulaires de communication 10 ne débouchant dans la chambre de combustion 2 que par des fentes discontinues définissant des ouvertures localisées réparties circulairement dans un plan perpendiculaire à l'axe de la chambre de combustion 2.

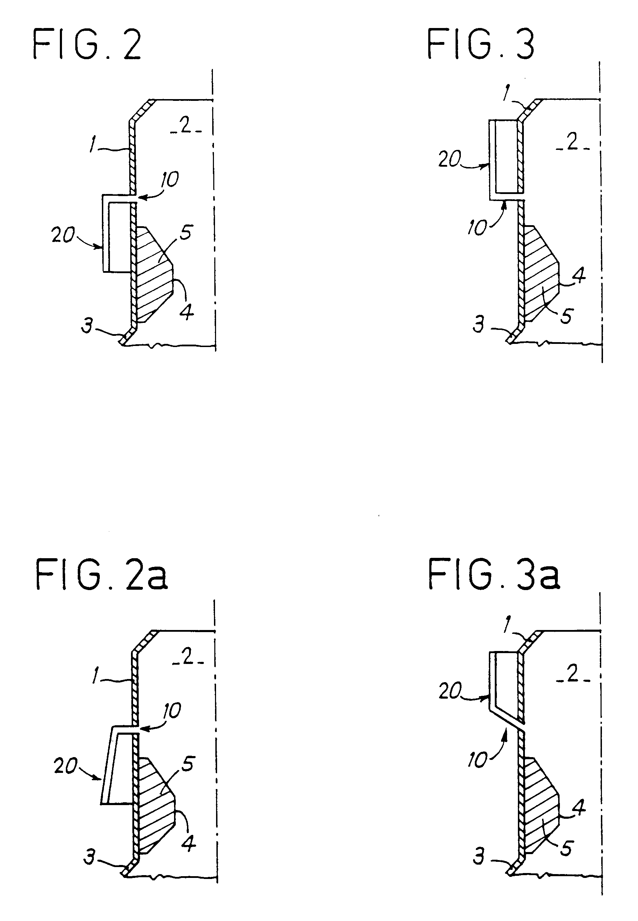

Les figures 2 à 6 et 2a, 3a montrent différents cas possibles de mise en oeuvre de cavités acoustiques 10,20 selon l'invention, c'est-à-dire de cavités se comportant comme des résonateurs quart d'onde avec couplage circonférentiel permettant l'amortissement à la fois des ondes de pression longitudinales, des ondes de pression radiales, des ondes de pression tangentielles et des combinaisons de ces divers types d'ondes, créées dans la chambre de combustion 2 par suite des instabilités de combustion.

Dans les modes de réalisation des figures 1 et 7, la cavité acoustique 10,20 est disposée au niveau du col 4 de la tuyère et débouche dans la chambre de combustion 2 au niveau du quart supérieur de l'insert 5 ou des inserts 5,6 formant le col 4 de la tuyère. Une telle disposition est efficace, bien que la cavité 10,20 soit éloignée de la tête d'injection du moteur-fusée.

Vis à vis d'un couplage tangentiel, il est préférable de mettre en oeuvre une cavité acoustique dont le rayon de la partie principale annulaire 20 n'est pas trop différent de celui de la paroi de la chambre de combustion 2.

Dans la configuration de la figure 2, on a représenté une cavité acoustique 10,20 selon l'invention, coaxiale à la chambre de combustion 2, avec une partie annulaire de communication 10 qui débouche dans la chambre de combustion immédiatement au dessus du col 4, et une partie principale annulaire 20, dirigée vers le bas par rapport à la partie annulaire de communication 10, qui est située à l'extérieur de la paroi 1 de la chambre 2.

La figure 3 concerne un autre mode de réalisation possible, qui montre que la partie principale annulaire 20 d'une cavité acoustique 10,20, peut être dirigée vers le haut par rapport à la partie annulaire de communication 10 et n'est pas obligatoirement située au niveau du col 4 de la tuyère.

Les figures 2a et 3a montrent des variantes de réalisation des figures 2 et 3 respectivement. Ainsi, la figure 2a montre que la partie principale annulaire 20 de la cavité peut présenter une certaine inclinaison par rapport à l'axe de la chambre de combustion 2 et peut donc ne pas être délimitée par des parois rigoureusement cylindriques. La figure 3a montre de la même manière que la partie annulaire de communication 10 peut être assez fortement inclinée par rapport à un plan radial perpendiculaire à l'axe de la chambre 2. Une combinaison des modes de réalisation des figures 2a et 3a est naturellement possible.

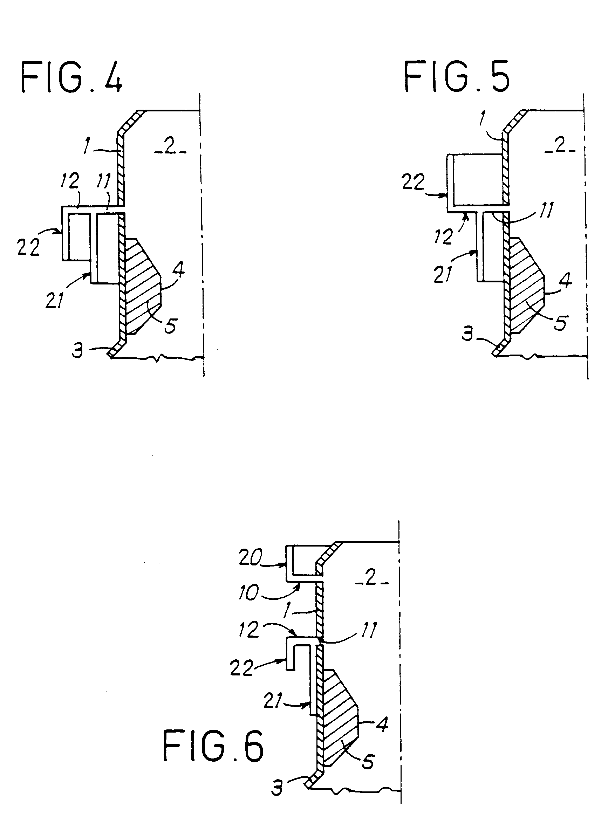

Les figures 4 à 6 montrent qu'il est possible de mettre en oeuvre avec une même chambre de combustion 2 simultanément plusieurs cavités acoustiques résonnantes qui, conformément à l'invention, fonctionnent en résonateurs quart d'onde et en couplage tangentiel.

La figure 4 montre la mise en oeuvre de deux cavités acoustiques résonnantes 11,21 et 12,22 qui présentent des parties principales annulaires 21,22 concentriques et de longueurs différentes pour être adaptées à des fréquences différentes. La figure 4 montre en outre que des cavités 11,21 et 12,22 différentes peuvent déboucher dans la chambre de combustion 2 au même niveau à travers une partie annulaire de communication commune 11.

Le mode de réalisation de la figure 5 est voisin de celui de la figure 4, mais montre deux cavités acoustiques résonnantes 11,21 et 12,22 qui, tout en débouchant dans la chambre de combustion 2 au même niveau, sont orientées différemment par rapport à la partie annulaire de communication commune 11, la cavité 11, 12 étant dirigée vers le bas tandis que la cavité 12,22 est orientée vers le haut.

La figure 6 montre encore un autre mode de réalisation à cavités acoustiques résonnantes multiples. Une première cavité résonnante 11,21 comprend une partie principale annulaire cylindrique 21 située derrière la paroi 1 de la chambre de combustion 2, au niveau du col de tuyère 4 et avec un rayon à peine supérieur à celui de la paroi 1. Une deuxième cavité résonnante 12,22 comprend une partie principale annulaire 22 concentrique à la partie principale annulaire 21, extérieure à celle-ci, et dirigée vers le bas, mais de longueur réduite, et une partie annulaire de communication 12 qui débouche dans la partie annulaire de communication 11. Une troisième cavité résonnante 10,20 est située dans la partie supérieure de la chambre de combustion 2, à l'extérieur de la paroi 1 et débouche dans la chambre de combustion 2 un peu au-dessous de la zone d'injection des ergols par une partie annulaire de communication 10 indépendante des parties annulaires de communication 11,12 des deux autres cavités.

Diverses combinaisons des modes généraux de réalisation des figures 2 à 6, 2a, 3a et des modes particuliers de réalisation des figures 1 et 7 à 13 sont naturellement possibles.

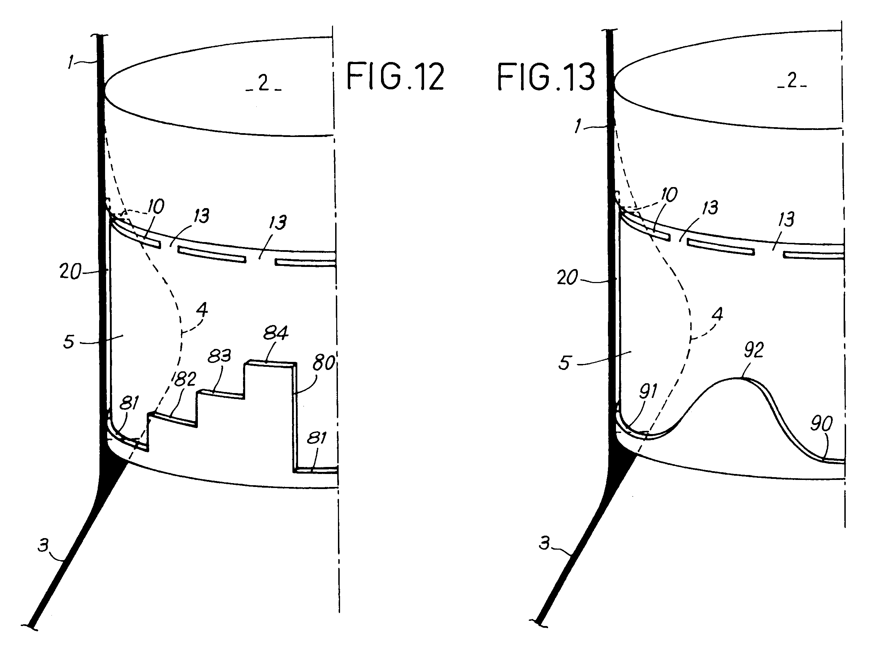

Comme on l'a indiqué en référence aux figures 4 à 6, plusieurs cavités acoustiques résonnantes différentes fonctionnant en résonateurs quart d'onde et en couplage tangentiel peuvent être associées à une même chambre de combustion 2 pour amortir des fréquences de vibration différentes. Une même cavité acoustique 10,20 peut toutefois être adaptée pour amortir des fréquences différentes, tout en conservant la capacité d'amortir des modes tangentiels. Cette possibilité est illustrée sur les figures 12 et 13 qui peuvent correspondre à une technologie de réalisation telle que celles décrites en référence aux figures 1, 1A et 7.

La figure 12 montre une cavité 10,20 dont la partie principale annulaire 20 présente sur le pourtour de la chambre de combustion 2 des portions de longueur différentes qui sont délimitées, à leur extrémité opposée à la partie annulaire de communication 10, par une paroi de fond étagée 80 constituée d'un ensemble de marches d'escalier consécutives 81 à 84. Un espace de longueur suffisamment grande par rapport à la dimension transversale e de la partie principale annulaire 20 doit naturellement être réservé entre la marche la plus haute 84 et la partie annulaire de communication 10, qui peut être une fente continue ou, comme sur la figure 12, une fente discontinue.

La figure 13 montre une cavité 10,20 qui, comme dans le cas de la figure 12, comprend une partie principale annulaire 20 présentant sur le pourtour de la chambre de combustion 2 des portions de longueur variable.

Dans le cas de la figure 13, la paroi de fond 90 délimitant la partie principale annulaire 20 du côté opposé à la partie annulaire de communication 10, présente une forme évoluant de façon continue entre un maximum et un minimum. Sur la figure 13, la paroi de fond présente une forme d'allure sinusoïdale, mais pourrait aussi présenter par exemple d'autres formes telles qu'une dent de scie par exemple. La partie principale annulaire 20 constitue l'équivalent de cavités quart d'onde juxtaposées verticales de différentes longueurs amortissant différentes fréquences, tout en autorisant un amortissement en couplage tangentiel dans la zone annulaire restant libre au-dessus de la paroi de fond 90.

Une cavité acoustique résonnante 10,20 peut le cas échéant contenir des obstacles tels que des chicanes, des grilles ou des produits fibreux, destinés à accroître l'amortissement des ondes acoustiques. Ces obstacles ne doivent cependant pas créer de solution de continuité dans la cavité. De plus, les produits fibreux utilisés doivent pouvoir supporter la température des gaz chauds et peuvent être constitués par exemple par de la mousse d'alumine ou des fibres céramiques.

On décrira ci-après quelques autres modes particuliers de réalisation d'un système d'amortissement des instabilités haute fréquence, selon l'invention.

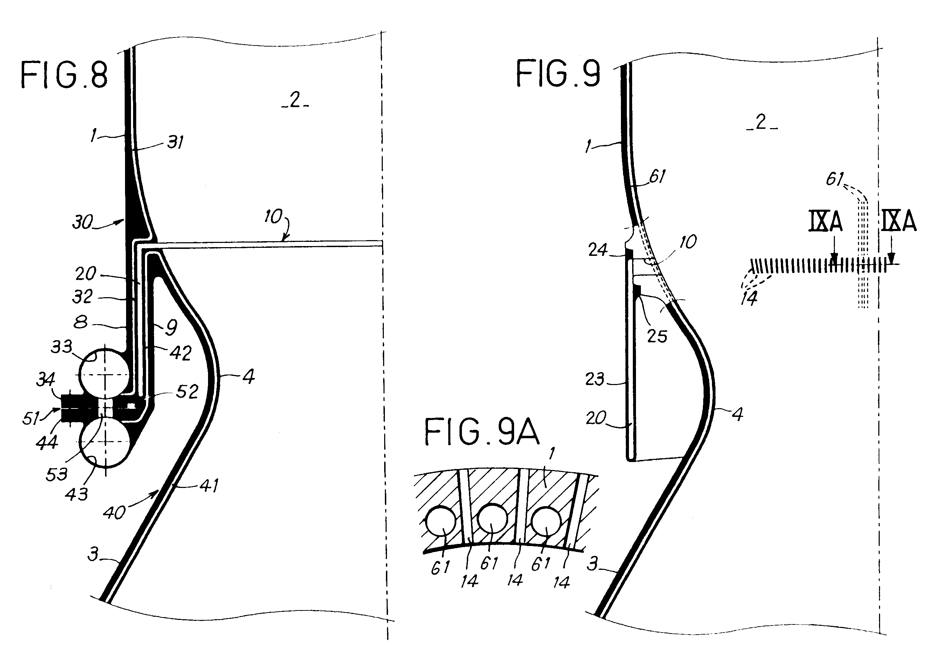

Si l'on se reporte à la figure 8, on voit une tuyère de moteur-fusée réalisée en deux parties, la première partie 30 constituant avec une paroi 1 la partie essentielle de la chambre de combustion 2 dont la section évolue peu et la deuxième partie 40 constituant l'essentiel de la partie convergente, le col 4 et le divergent 3 de la tuyère. Chacune des deux parties 30,40 de la tuyère peut être équipée d'un circuit de refroidissement constitué de canaux 31 respectivement 41 de circulation d'un ergol de refroidissement. Les deux parties 30,40 de la tuyère sont raccordées par une liaison à brides 34,44 et les circuits de refroidissement 31,41 des première et deuxième parties 30,40 débouchent dans des tores 33,43 éventuellement connectés entre eux par des orifices de communication 53.

Conformément à la présente invention, une cavité acoustique 10,20 est formée entre chacune des deux parties 30,40 constitutives de la tuyère au niveau de leur raccordement lors de l'emmanchement des deux pièces 30,40. Ainsi, la paroi sensiblement cylindrique de la chambre de combustion 2 définie par la première partie 30 est prolongée vers le bas par une paroi cylindrique 8 dont l'extrémité porte le tore 33 et la bride 34. La paroi de la deuxième partie 40 définissant le col 4 et le divergent 3 de la tuyère est elle-même rabattue à son extrémité supérieure pour former derrière le col 4 une paroi cylindrique 9 située en regard de la paroi cylindrique 8 et formant avec celle-ci la cavité acoustique 10,20 qui peut notamment présenter une partie annulaire de communication 10 débouchant dans la chambre de combustion 2 dans un espace annulaire calibré défini entre la paroi 1 de la première partie 30 et les parois 4,3 de la deuxième partie 40. La partie principale annulaire 20 de la cavité acoustique est définie par l'espace annulaire situé entre les deux parois cylindriques 8,9. Un joint 52 assure l'étanchéité à la partie inférieure de la partie principale annulaire 20 au niveau des brides 34,44. Les canaux de refroidissement 31 de la paroi sont prolongés à travers la paroi 8 par des canaux de refroidissement 32 qui assurent un refroidissement de la cavité acoustique 10,20 et débouchent dans le tore de refroidissement 33. De façon similaire, les canaux de refroidissement 41 de la paroi formant le col 4 et le divergent 3 sont prolongés à travers la paroi 9 par des canaux de refroidissement 42 qui longent la cavité 10,20 et débouchent dans le tore de refroidissement 43.

La figure 9 montre une tuyère dont la paroi est refroidie par des canaux 61 (voir aussi la figure 9A) verticaux ou hélicoïdaux. Une cavité acoustique 10,20 constituant un système d'amortissement d'instabilités HF selon l'invention est réalisée à l'aide d'une couronne 23 formée à partir de deux parois cylindriques concentriques, rapportée autour du col de la tuyère 4, fermée à sa partie inférieure et soudée par exemple à sa partie supérieure, par des cordons annulaires de soudure 24,25 sur la paroi 1 de la chambre de combustion, un peu au-dessus du col 4, la couronne 23 pouvant présenter un rayon très voisin de celui de la partie cylindrique de la chambre de combustion 2.

La partie annulaire de communication 10 entre la partie principale annulaire 20 et la chambre de combustion 2 peut être constituée par un ensemble de fentes verticales 14 réparties sur tout le pourtour de la chambre 2, et usinées par exemple par électro-érosion dans les zones de la paroi 1 de la chambre 2 situées entre les canaux de refroidissement 61.

Le fait que les fentes communiquent avec ladite partie annulaire de communication 10, et que cette partie annulaire constitue une cavité continue, permet l'amortissement des modes tangentiels.

Dans ce mode de réalisation, la cavité 10,20 qui peut ou non être munie de moyens de refroidissement, pourrait présenter un rayon plus grand que celui de la chambre de combustion et être située dans une région qui n'est pas au voisinage immédiat du col, comme dans les modes de réalisation des figures 3,5 ou 6 par exemple.

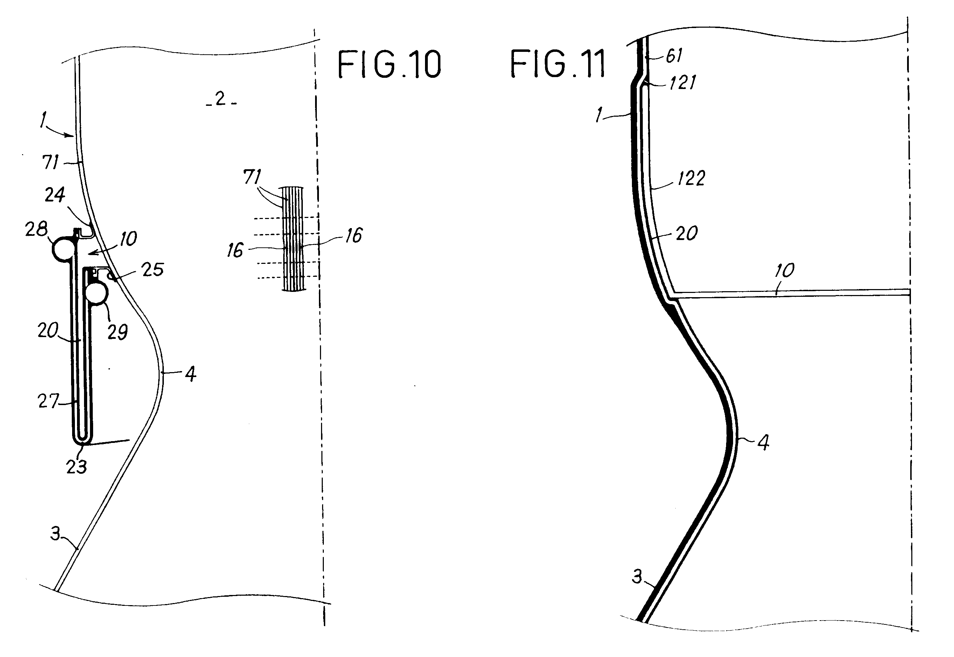

La figure 10 concerne une tuyère constituée à l'aide de tubes de refroidissement 71 soudés ou brasés entre eux. Dans ce cas, une cavité acoustique 10,20 peut être réalisée de façon tout-à-fait analogue au mode de réalisation de la figure 9, à l'aide d'une couronne 23 formée à partir de deux surfaces cylindriques concentriques, rapportée, par exemple autour du col 4 de la tuyère, fermée à sa partie inférieure et soudée par exemple à sa partie supérieure, par des cordons annulaires de soudure 24,25 sur la face extérieure de la paroi 1 de la tuyère. La couronne 23 peut toutefois de préférence, être formée de plusieurs secteurs assemblés entre eux par soudure, ce qui facilite le montage des moyens de refroidissement 27 à 29 qui seront évoqués plus loin.

La partie annulaire de communication 10 entre la partie principale annulaire 20 et la chambre de combustion 2 peut être constituée par un ensemble de passages verticaux 16 répartis sur tout le pourtour de la chambre 2 et constitués par des parties rétreintes de tubes de refroidissement 71. La cavité acoustique 10,20 peut ou non être munie de moyens de refroidissement. Sur la figure 10 on a représenté des canaux de refroidissement 27 qui assurent le refroidissement de chacune des parois de la partie principale annulaire 20 et sont raccordés à des tores 28,29 d'alimentation et d'évacuation de liquide de refroidissement. Le montage de la couronne 23 de la figure 10 et des moyens de refroidissement 27 à 29 peut être réalisé en un seul ensemble si la tuyère est réalisée en deux parties comme sur la figure 8 ou bien peut être réalisé à partir de plusieurs secteurs assemblées les uns aux autres sans cloison intermédiaire.

La figure 11 montre un mode particulier de réalisation dans lequel une cavité acoustique 10,20 est réalisée au-dessus du col 4 d'une tuyère, dans un renflement de la paroi 1 de la chambre de combustion 2. La partie principale annulaire 20 de la cavité acoustique 10,20 est dans ce cas aménagée entre le renflement de la paroi 1 de la tuyère et une cloison interne 122 refroidie par un film d'ergol délivré par des orifices 121, à partir d'un circuit de refroidissement 61 de la paroi 1, sur la face de la cloison 122 située du côté foyer. Dans ce cas, la partie annulaire de communication 10 peut être constituée par une simple fente circulaire intermittente ou non, réalisée à la base de la cloison 122 au-dessus du col 4. Dans le mode de réalisation de la figure 11, le profil de la partie principale annulaire 20, vu dans une section par un demi-plan axial, n'est pas rigoureusement rectangulaire, mais est légèrement incurvé, tout en demeurant très allongé par rapport à la dimension transversale e de la cavité.

Comme on l'a déjà indiqué, la mise en place d'une cavité acoustique selon l'invention peut être envisagée à différents niveaux de la chambre de combustion et de la partie formant la tuyère proprement dite. Toutefois, lorsque la cavité acoustique est prévue au niveau du col 4 de la tuyère, l'optimisation de la cavité acoustique et sa réalisation sont grandemment facilitées puisqu'il s'agit d'une zone où il y a excédent de matière (dans le cas d'un col défini par un insert 5 monobloc ou non) et où l'on dispose de toute manière d'une grande liberté d'aménagement sans accroître l'encombrement, tout en pouvant réaliser des cavités acoustiques 10,20 de rayon sensiblement égal à celui de la chambre de combustion 2, qui sont particulièrement efficaces pour assurer un bon couplage des ondes tangentielles de la cavité 10,20 avec celles de la chambre de combustion 2.

Le fonctionnement de chaque cavité acoustique 10,20 selon un type résonateur quart d'onde se traduit par l'atténuation de l'amplitude des modes acoustiques présents dans la chambre pour ceux de ces modes dont la fréquence est voisine de l'une des fréquences de la cavité. Cet effet est dû à l'absorption de l'énergie acoustique par dissipation visqueuse et thermique au contact entre les gaz et les parois de la cavité et des orifices de la partie annulaire de communication. L'efficacité de la cavité peut ainsi être améliorée par une adaptation de la géométrie, du nombre et de la position des orifices ou de la fente de la partie annulaire de communication 10.

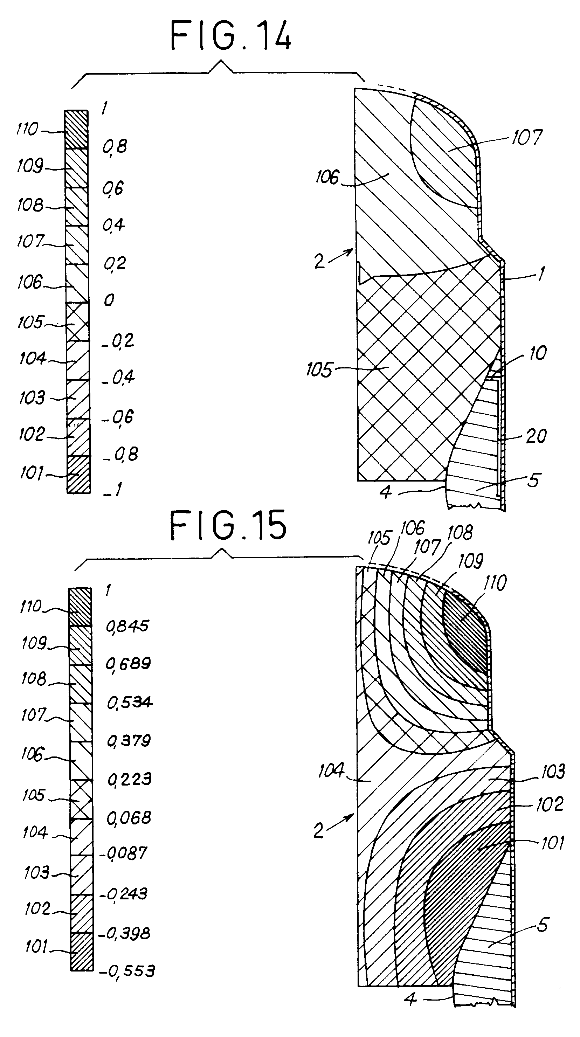

A titre d'exemple, on décrira en référence aux figures 14 à 17 une étude comparative par éléments finis de résonances acoustiques montrant la nature et l'importance de l'amortissement réalisé à l'aide d'un système d'amortissement selon l'invention.

Dans une telle étude par éléments finis des résonances acoustiques, on suppose la chambre de combustion 2 remplie d'un gaz ayant même masse spécifique que les gaz de combustion. On calcule à l'intérieur de la chambre de combustion 2, et jusqu'au col 4, hors combustion, les caractéristiques des ondes de résonance acoustique, c'est-à-dire des ondes dont les raies du spectre de fréquence présentent une amplitude qui atteint une valeur significative. On établit en particulier les modes des ondes de pression, c'est-à-dire les directions prises par ces ondes, et liées aux fréquences de résonance. Il existe des modes tangentiels (circulaires), longitudinaux, radiaux et des combinaisons de ces modes. On repère également pour les différentes fréquences de résonance le nombre de longueurs d'onde comprises dans les trois dimensions de la chambre de combustion 2. Enfin, on établit, en valeur relatives, les cartes des pressions acoustiques internes de la chambre de combustion.

La figure 14 montre la répartition des niveaux de pression, en valeurs relatives dans une chambre de combustion 2 équipée d'une cavité acoustique 10,20 du type fonctionnant en résonateur quart d'onde et en couplage tangentiel conformément à l'invention, pour un mode donné 1T1L, c'est-à-dire premier mode tangentiel, premier mode longitudinal.

La figure 15 montre la répartition des niveaux de pression, en valeurs relatives, dans la même chambre de combustion 2 non équipée d'une cavité acoustique selon l'invention, pour le même mode 1T 1L.

On constate que la disparité entre les niveaux de pression est beaucoup plus grande dans le cas de la figure 15, tandis que dans le cas de la figure 14 qui met en oeuvre l'invention, on constate que les variations relatives de niveau de pression dans la chambre sont beaucoup plus réduites. La cavité acoustique 10,20 réduit ainsi de façon sensible, de l'ordre de 50% l'amplitude des oscillations de pression dans la chambre 2.

Sur les figures 14 et 15, les différentes plages volumiques de pression, de la plus faible à la plus grande sont repérées par les références 101 à 110. Aux frontières de ces plages, on trouve bien entendu des surfaces isobares, représentées par des lignes dans les coupes des figures 14 et 15.

L'étude de modélisation a montré par ailleurs que la cavité acoustique absorbe une fraction importante de la puissance acoustique. Le niveau maximum de pression est en effet atteint dans la cavité, ce qui conduit à une forte dissipation de la puissance acoustique par viscosité dans la cavité. Dans le cas de la figure 14 la longueur de la cavité 10,20 a été déterminée en fonction de la longueur d'onde du mode à amortir de manière à définir un résonateur quart d'onde et maximiser la puissance absorbée dans la cavité 10,20 pour la fréquence considérée.

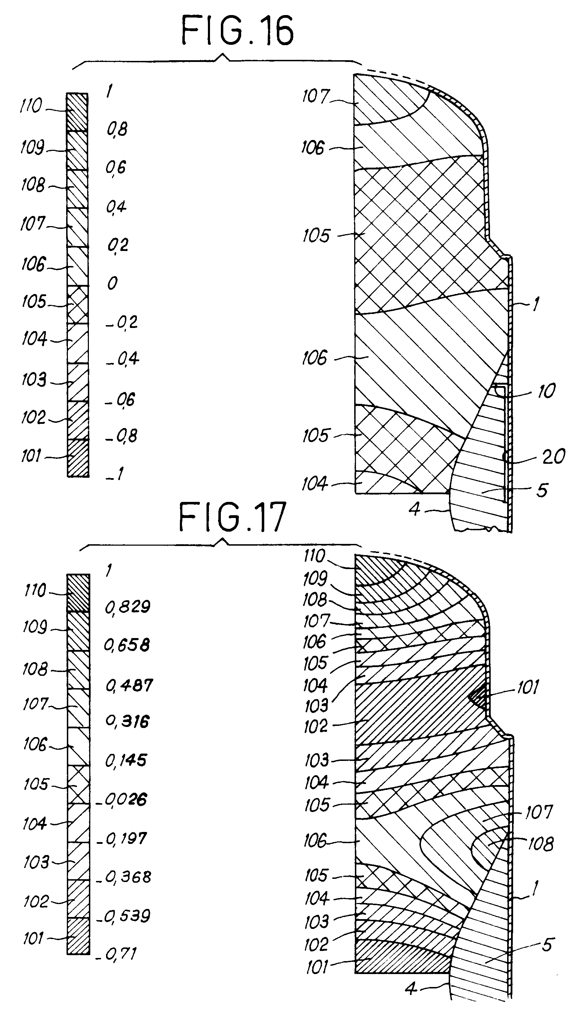

Les figures 16 et 17 montrent comme les figures 14 et 15, la répartition des niveaux de pression, en valeurs relatives, dans une chambre de combustion 2 respectivement avec et sans cavité acoustique 10,20, mais dans le cas où le mode concerné est le troisième mode longitudinal (3L).

On observe la même réduction, de l'ordre de 50%, du niveau relatif dans la chambre 2, dans le cas de la carte des pression de la figure 16 qui correspond à un mode de réalisation avec cavité acoustique selon l'invention.

## Revendications

1. Système d'amortissement des instabilités de combustion haute fréquence dans une chambre de combustion (2) notamment de moteur-fusée à partir d'au moins une cavité résonnante (20) mise en communication avec ladite chambre de combustion (2),
caractérisé en ce qu'il comprend au moins une cavité acoustique résonnante (10, 20) disposée autour de la chambre de combustion (2) et présentant une géométrie et des dimensions telles qu'elle fonctionne simultanément en résonateur quart d'onde et en couplage tangentiel, et en ce que ladite cavité acoustique résonnante (10, 20) comprend :
a) une partie principale annulaire (20) dont la section par un demi-plan axial présente une forme très allongée avec une dimension transversale "e" qui est très petite vis-à-vis de la dimension longitudinale "L₁" qui s'étend elle-même sensiblement parallèlement à l'axe de symétrie de la chambre de combustion, le rayon moyen "R" de la partie principale annulaire (20) étant voisin du rayon équivalent des modes de vibration à amortir, et
b) une partie annulaire de communication (10) qui prend naissance dans la partie principale annulaire (20) et débouche dans la chambre de combustion (2) à proximité d'un ventre de pression longitudinal ou radial, la partie annulaire de communication (10) présentant en section par un demi-plan axial une longueur L₂, et une dimension transversale "h" très inférieure à la somme de la dimension longitudinale "L₁" de la partie principale annulaire (20) et de la longueur "L₂" de la partie annulaire de communication (10).

2. Système d'amortissement selon la revendication 1, caractérisé en ce que la dimension transversale "e" de la partie principale annulaire (20) et la dimension transversale "h" de la partie annulaire de communication (10) de la cavité acoustique résonnante (10, 20) sont comprises entre environ quelques dixièmes de millimètres et une dizaine de millimètres.

3. Système d'amortissement selon la revendication 1 ou la revendication 2, caractérisé en ce que la partie annulaire de communication (10) prend naissance dans une zone située dans la partie d'extrémité supérieure de la partie principale annulaire (20).

4. Système d'amortissement selon la revendication 1 ou la revendication 2, caractérisé en ce que la partie annulaire de communication (10) prend naissance dans une zone située dans la partie d'extrémité inférieure de la partie principale annulaire (20).

5. Système d'amortissement selon l'une quelconque des revendications 1 à 4, caractérisé en ce que la partie annulaire de communication (10) débouche dans la chambre de combustion (2) par une fente circulaire formée sur tout le pourtour de ladite chambre.

6. Système d'amortissement selon l'une quelconque des revendications 1 à 4, caractérisé en ce que la partie annulaire de communication (10) débouche dans la chambre de combustion (2) par une fente circulaire discontinue située dans un plan perpendiculaire à l'axe de la chambre de combustion (2).

7. Système d'amortissement selon l'une quelconque des revendications 1 à 6, caractérisé en ce que la partie principale annulaire (20) présente en section par un demi-plan axial, sensiblement la forme d'un rectangle très allongé.

8. Système d'amortissement selon l'une quelconque des revenications 1 à 7, caractérisé en ce qu'il comprend des canaux de refroidissement (32, 42; 27) qui longent la cavité acoustique (10, 20).

9. Système d'amortissement selon l'une quelconque des revendications 1 à 8, caractérisé en ce que la partie principale annulaire (20) présente sur le pourtour de la chambre de combustion (2) des portions de longueurs différentes correspondant à des fréquences d'amortissement différentes, la paroi de fond (80; 90) opposée à la zone dans laquelle prend naissance la partie annulaire de communication (10) étant située à des distances différentes de ladite partie annulaire de communication (10), mais avec une distance minimale pour permettre un amortissement en couplage tangentiel.

10. Système d'amortissement selon la revendication 9, caractérisé en ce que ladite paroi de fond (80) opposée à la zone dans laquelle prend naissance la partie annulaire de communication (10) présente une évolution en marches d'escaliers ( 81 à 84).

11. Système d'amortissement selon la revendication 9, caractérisé en ce que ladite paroi de fond (90) opposée à la zone dans laquelle prend naissance la partie annulaire de communication (10) présente une évolution alternative dont l'allure est sinusoïdale (91, 92) ou en dent de scie.

12. Système d'amortissement selon l'une quelconque des revendications 1 à 11, caractérisé en ce que la partie principale annulaire (20) contient des obstacles sous la forme de chicanes, grilles ou produits fibreux, destinés à accroître l'amortissement des ondes acoustiques sans créer de solution de continuité dans la cavité.

13. Système d'amortissement selon l'une quelconque des revendications 1 à 12, caractérisé en ce qu'il comprend plusieurs cavités acoustiques résonnantes (11, 21; 12, 22) adaptées à différentes vibrations, comprenant plusieurs parties principales annulaires (21, 22) coaxiales débouchant dans des parties annulaires de communication (11, 12) présentant au moins une portion commune débouchant dans la chambre de combustion (2).

14. Système d'amortissement selon l'une quelconque des revendications 1 à 13, caractérisé en ce qu'il comprend plusieurs cavités acoustiques résonnantes (10, 20; 11, 21; 12, 22) adaptées à différentes vibrations, comprenant des parties annulaires de communication (10, 11, 12) débouchant à divers niveaux de la chambre de combustion (21).

15. Système d'amortissement selon l'une quelconque des revendications 1 à 4 et 8 à 12, caractérisé en ce qu'il comprend une cavité acoustique annulaire (10, 20) dont la partie principale annulaire (20) est située derrière le col (4) de la tuyère (1,4,3) et présente un rayon (R) sensiblement égal au rayon de la chambre de combustion (2).

16. Système d'amortissement selon la revendication 15, caractérisé en ce que la partie annulaire de communication (10) débouche dans la chambre de combustion (2) au niveau du quart supérieur de la partie formant le col (4) de la tuyère (1, 4, 3).

17. Système d'amortissement selon la revendication 5 et la revendication 16, caractérisé en ce que la partie annulaire de communication (10) est constituée par une fente continue ménagée entre un insert inférieur principal (5) et un insert supérieur secondaire (6) définissant le col (4) de la tuyère (1, 4, 3) et en ce que la partie principale annulaire (20) est située entre la face extérieure de l'insert inférieure principal (5) et la face intérieure de la paroi (1) qui délimitent la chambre de combustion (2) et sur laquelle sont rapportés lesdits insert inférieur principal (5) et insert supérieur secondaire (6).

18. Système d'amortissement selon la revendication 6 et la revendication 16, caractérisé en ce que la partie annulaire de communication (10) est constituée par une fente discontinue ménagée sur le pourtour de la chambre de combustion (2) dans un insert unique monobloc (5) définissant le col (4) de la tuyère (1, 4, 3) et en ce que la partie principale annulaire (20) est située entre la face extérieure dudit insert unique monobloc (5) et la face intérieure de la paroi (1) qui délimite la chambre de combustion (2) et sur laquelle est rapporté ledit insert unique monobloc (5).

19. Système d'amortissement selon l'une quelconque des revendications 1 à 4 et 6 à 16, appliqué à un moteur-fusée dont la tuyère (1, 4, 3) est refroidie par des canaux de refroidissement (61) parallèles verticaux ou hélicoïdaux, caractérisé en ce qu'il comprend une couronne cylindrique rapportée autour de la tuyère (1, 4, 3) pour définir ladite cavité acoustique résonnante (10, 20) et en ce que la partie annulaire de communication (10) débouche dans la chambre de combustion (2) à travers une série de fentes (14) formées dans la paroi de la tuyère (1, 4, 3) entre les canaux de refroidissement (61).

20. Système d'amortissement selon l'une quelconque des revendications 1 à 4 et 6 à 16, appliqué à un moteur-fusée dont la tuyère (1, 4, 3) est formée à partir de tubes de refroidissement soudés (71), caractérisé en ce qu'il comprend une couronne cylindrique rapportée autour de la tuyère (1, 4, 3) pour définir ladite cavité acoustique résonnante (10, 20) et en ce que la partie annulaire de communication (10) débouche dans la chambre de combustion (2) à travers une série de passages (16) constitués pas des parties rétreintes des tubes (71) constituant la paroi de la tuyère (1, 4, 3).

21. Système d'amortissement selon la revendication 19 ou la revendication 20, caractérisé en ce que ladite couronne cylindrique rapportée est formée de plusieurs secteurs assemblés par soudure.

22. Système d'amortissement selon l'une quelconque des revendications 19 à 21, caractérisé en ce qu'il comprend un circuit (27 à 29) de refroidissement de ladite couronne cylindrique rapportée constituant la cavité acoustique résonnante (10, 20).

23. Système d'amortissement selon l'une quelconque des revendications 1,2 et 4 à 12, caractérisé en ce que la partie principale annulaire (20) est aménagée entre un renflement de la paroi (1) de la tuyère et une cloison (122) située du côté de la chambre de combustion (2), en ce que des moyens (121) sont prévus pour refroidir à l'aide d'un film d'ergol ladite cloison (122) sur la face opposée à celle délimitant la partie principale annulaire (20) et en ce que la partie annulaire de communication (10) prend naissance dans une zone située dans la partie inférieure de la partie principale annulaire (20).

24. Système d'amortissement selon l'une quelconque des revendications 1 à 13 et 15,16 appliqué à un moteur-fusée dont la tuyère (1, 4, 3) est réalisée en deux parties raccordées par des brides (34, 44), caractérisé en ce que la cavité acoustique résonnante (10, 20) est délimitée par des parois (8, 9) appartenant respectivement à chacune des deux parties constitutives de la tuyère (1, 4, 3).

25. Système d'amortissement selon la revendication 24, caractérisé en ce que la cavité acoustique résonnante (10, 20) est refroidie au moyen de canaux de refroidissement (32, 42) appartenant respectivement à chacune des deux parties constitutives de la tuyère (1, 4, 3) et mis en communication avec des canaux de refroidissement de la paroi de la tuyère (1, 4, 3).

## Claims

1. Damping system for high frequency combustion instabilities in a combustion chamber (2), especially of a rocket engine, using at least one resonant cavity (20) communicating with said combustion chamber (2),
characterized in that it comprises at least one resonant acoustic cavity (10, 20) disposed around the combustion chamber (2) and having a shape and dimensions such that it functions simultaneously as a quarter-wave resonator and with tangential coupling, and in that said resonant acoustic cavity (10, 20) comprises:
a) a main annular part (20) whose half axial section has a very elongate shape with a width dimension "e" which is very small compared to the longitudinal dimension "L₁" which extends substantially parallel to the axis of symmetry of the combustion chamber, the mean radius "R" of the main annular part (20) being close to the equivalent radius of modes of oscillation to be damped, and
b) an annular coupling part (10) which originates from the main annular part (20) and opens into the combustion chamber (2) near to a longitudinal or radial pressure anti-node, the annular coupling part (10) having a length "L₂" in a half axial section and a width dimension "h" very much less than the sum of the longitudinal dimension "L₁" of the main annular part (20) and the length "L₂" of the annular coupling part (10).

2. Damping system according to claim 1, characterized in that the width dimension "e" of the main annular part (20) and the width dimension "h" of the annular coupling part (10) of the resonant acoustic cavity (10, 20) lie in the range of some tenths of a millimeter to about ten millimeters.

3. Damping system according to claim 1 or claim 2, characterized in that the annular coupling part (10) originates in a region situated in the upper end part of the main annular part (20).

4. Damping system according to claim 1 or claim 2, characterized in that the annular coupling part (10) originates in a region situated in the lower end part of the main annular part (20).

5. Damping system according to any one of claims 1 to 4, characterized in that the annular coupling part (10) opens into the combustion chamber (2) through a circular aperture extending over the whole perimeter of said chamber.

6. Damping system according to any one of claims 1 to 4, characterized in that the annular coupling part (10) opens into the combustion chamber (2) through a discontinuous circular aperture located in a plane perpendicular to the axis of the combustion chamber (2).

7. Damping system according to any one of claims 1 to 6, characterized in that the main annular part (20) has a half axial section substantially in the form of a very elongate rectangle.

8. Damping system according to any one of claims 1 to 7, characterized in that it comprises cooling channels (32, 42; 27) bordering the acoustic cavity (10, 20).

9. Damping system according to any one of claims 1 to 8, characterized in that the main annular part (20) has parts of differing lengths around the perimeter of the combustion chamber (2), corresponding to differing damping frequencies, the bottom wall (80; 90) remote from the region in which the annular coupling part (10) originates being located at differing distances from said annular coupling part (10) but with a minimum distance allowing damping and tangential coupling.

10. Damping system according to claim 9, characterized in that said bottom wall (80) remote from the region in which the annular coupling part (10) originates has the shape of a succession of steps (81 to 84).

11. Damping system according to claim 9, characterized in that said bottom wall (90) remote from the region in which the annular coupling part (10) originates has an undulating shape of sinusoidal (91, 92) or sawtooth form.

12. Damping system according to any one of claims 1 to 11, characterized in that the main annular part (20) contains obstacles in the form of baffles, gratings or fibrous material, adapted to enhance the damping of acoustic waves without interrupting the continuity of the cavity.

13. Damping system according to any one of claims 1 to 12, characterized in that it comprises a plurality of resonant acoustic cavities (11, 21; 12, 22) adapted to differing oscillations, comprising a plurality of coaxial main annular parts (21, 22) opening into annular coupling parts (11, 12) having at least one common portion opening into the combustion chamber (2).

14. Damping system according to any one of claims 1 to 13, characterized in that it comprises a plurality of resonant acoustic cavities (10, 20; 11, 21; 12, 22) adapted to differing oscillations, comprising annular coupling parts (10, 11, 12) opening into the combustion chamber (21) at differing levels.

15. Damping system according to any one of claims 1 to 4 and 8 to 12, characterized in that it comprises an annular acoustic cavity (10, 20) whose main annular part (20) is located behind the throat (4) of the nozzle (1, 4, 3) and has a radius (R) substantially equal to the radius of the combustion chamber (2).

16. Damping system according to claim 15, characterized in that the annular coupling part (10) opens into the combustion chamber (2) at the level of the upper quarter of the part forming the throat (4) of the nozzle (1, 4, 3).

17. Damping system according to claim 5 and claim 16, characterized in that the annular coupling part (10) is formed by a continuous aperture provided between a lower main insert (5) and an upper secondary insert (6) defining the throat (4) of the nozzle (1, 4, 3) and in that the main annular part (20) is located between the outer surface of the lower main insert (5) and the inner surface of the wall (1) which delimits the combustion chamber (2) and to which said lower main insert (5) and upper secondary insert (6) are attached.

18. Damping system according to claim 6 and claim 16, characterized in that the annular coupling part (10) is formed by a discontinuous aperture provided around the perimeter of the combustion chamber (2) in a single solid block insert (5) defining the throat (4) of the nozzle (1, 4, 3) and in that the main annular part (20) is located between the outer surface of said single solid block insert (5) and the inner surface of the wall (1) which delimits the combustion chamber (2) and to which said single solid block insert (5) is attached.

19. Damping system according to any one of claims 1 to 4 and 6 to 16, applied to a rocket engine whose nozzle (1, 4, 3) is cooled by parallel vertical or helicoidal cooling channels (61), characterized in that it comprises a cylindrical collar built round the nozzle (1, 4, 3) to define said resonant acoustic cavity (10, 20) and in that the annular coupling part (10) opens into the combustion chamber (2) through a series of apertures (14) formed in the wall of the nozzle (1, 4, 3) between the cooling channels (61).

20. Damping system according to any one of claims 1 to 4 and 6 to 16, applied to a rocket engine whose nozzle (1, 4, 3) is formed from welded cooling tubes (71), characterized in that it comprises a cylindrical collar built round the nozzle (1, 4, 3) to define said resonant acoustic cavity (10, 20) and in that the annular coupling part (10) opens into the combustion chamber (2) through a series of passages (16) formed by swaged parts of the tubes (71) forming the wall of the nozzle (1, 4, 3).

21. Damping system according to claim 19 or claim 20, characterized in that said associated cylindrical collar is formed by a plurality of sectors welded together.

22. Damping system according to any one of claims 19 to 21, characterized in that it comprises a cooling circuit (27 to 29) for said associated cylindrical collar forming the resonant acoustic cavity (10, 20).

23. Damping system according to any one of claims 1, 2 and 4 to 12, characterized in that the main annular part (20) is fitted between a bulge in the wall (1) of the nozzle and a partition (122) located at the side of the combustion chamber (2), in that means (121) are provided to cool said partition (122) with a film of propellant on the face opposite that bounding the main annular part (20) and in that the annular coupling part (10) originates at a region located in the lower part of the main annular part (20).

24. Damping system according to any one of claims 1 to 13 and 15, 16, applied to a rocket engine whose nozzle (1, 4, 3) is formed in two parts connected by flanges (34, 44), characterized in that the resonant acoustic cavity (10, 20) is delimited by walls (8, 9) pertaining respectively to the two constituent parts of the nozzle (1, 4, 3).

25. Damping system according to claim 24, characterized in that the resonant acoustic cavity (10, 20) is cooled by means of cooling channels (32, 42) pertaining respectively to the two constituent parts of the nozzle (1, 4, 3) and communicating with the cooling channels of the wall of the nozzle (1, 4, 3).

## Patentansprüche

1. Vorrichtung zum Dämpfen der Hochfrequenzverbrennungsinstabilitäten in einer Brennkammer (2), insbesondere eines Raketenantriebs, ausgehend von wenigstens einem mitschwingenden Hohlraum (20), der in Verbindung steht mit der Brennkammer (2),
dadurch gekennzeichnet, daß sie wenigstens einen mitschwingenden akustischen Hohlraum (10, 20) aufweist, der um die Brennkammer (2) herum angeordnet ist, und eine Geometrie und Abmessungen aufweist, derart, daß er gleichzeitig als Viertelwellen-Resonator und als tangentielle Kupplung funktioniert, und daß der mitschwingende akustische Hohlraum (10, 20) aufweist:
a) einen ringförmigen Hauptbereich (20), dessen Schnitt durch eine axiale Halbebene eine sehr längliche Form mit einer Querabmessung "e" aufweist, die sehr klein ist bezüglich der Längsabmessung "L₁", die sich selbst im wesentlichen parallel zur Symmetrieachse der Brennkammer erstreckt, wobei der mittlere Radius "R" des ringförmigen Hauptbereichs (20) in der Nähe des Radiuses ist, der gleich den zu dämpfenden Vibrationsbereichen ist, und
b) einen ringförmigen Verbindungsbereich (10), der von dem ringförmigen Hauptbereich (20) ausgeht, und in der Brennkammer (2) in der Nähe eines Längs- oder Radialdruckbauches mündet, wobei der ringförmige Verbindungsbereich (10) im Schnitt durch eine axiale Halbebene eine Länge "L₂", und eine Querabmessung "h" aufweist, die sehr viel kleiner ist, als die Summe der Längsabmessung "L₁" des ringförmigen Hauptbereichs (20) und der Länge "L₂" des ringförmigen Verbindungsbereichs (10).

2. Dämpfungsvorrichtung nach Anspruch 1, dadurch gekennzeichnet, daß die Querabmessung "e" des ringförmigen Hauptbereichs (20) und die Querabmessung "h" des ringförmigen Verbindungsbereichs (10) des mitschwingenden akustischen Hohlraums (10, 20) zwischen ungefähr einigen zehntel Millimetern und ungefähr zehn Millimeter betragen.

3. Dämpfungsvorrichtung nach Anspruch 1 oder Anspruch 2, dadurch gekennzeichnet, daß der ringförmige Verbindungsbereich (10) von einer Zone herstammt, die in dem oberen Endbereich des ringförmigen Hauptbereichs (20) angeordnet ist.

4. Dämpfungsvorrichtung nach Anspruch 1 oder Anspruch 2, dadurch gekennzeichnet, daß der ringförmige Verbindungsbereich (10) in einer Zone beginnt, die im unteren Endbereich des ringförmigen Hauptbereichs (20) angeordnet ist.

5. Dämpfungsvorrichtung nach einem der Ansprüche 1 bis 4, dadurch gekennzeichnet, daß der ringförmige Verbindungsbereich (10) in der Brennkammer (2) durch einen kreisförmigen Spalt mündet, der am gesamten Umfang der Kammer ausgebildet ist.

6. Dämpfungsvorrichtung nach einem der Ansprüche 1 bis 4, dadurch gekennzeichnet, daß der ringförmige Verbindungsbereich (10) in der Brennkammer (2) durch einen unterbrochenen kreisförmigen Spalt mündet, der in einer Ebene senkrecht zur Achse der Brennkammer (2) angeordnet ist.

7. Dämpfungsvorrichtung nach einem der Ansprüche 1 bis 6, dadurch gekennzeichnet, daß der ringförmige Hauptbereich (20) im Querschnitt durch eine axiale Halbebene, im wesentlichen die Form eines sehr gestrecktes Rechtecks aufweist.

8. Dämpfungsvorrichtung nach einem der Ansprüche 1 bis 7, dadurch gekennzeichnet, daß sie Kühlkanäle (32, 42; 27) aufweist, die sich entlang des akustischen Hohlraums (10, 20) erstrecken.

9. Dämpfungsvorrichtung nach einem der Ansprüche 1 bis 8, dadurch gekennzeichnet, daß der ringförmige Hauptbereich (20) am Umfang der Brennkammer (2) unterschiedliche Längsabschnitte aufweist, entsprechend unterschiedlichen Dämpfungsfrequenzen, wobei die Bodenwand (80; 90) gegenüber der Zone, in der der ringförmige Bereich der Verbindung (10) beginnt, in unterschiedlichen Abständen von der ringförmigen Verbindungskammer (10) angeordnet ist, jedoch mit einem minimalen Anstand, um eine tangentiale Kupplungsdämpfung zu ermöglichen.

10. Dämpfungsvorrichtung nach Anspruch 9, dadurch gekennzeichnet, daß die Bodenwand (80) gegenüber der Zone in der der ringförmige Verbindungsbereich (10) beginnt, eine Entwicklung oder Ausbreitung in Form von Leiterstufen (81 bis 84) aufweist.

11. Dämpfungsvorrichtung nach Anspruch 9, dadurch gekennzeichnet, daß die Bodenwand (90) gegenüber der Zone, in der der ringförmige Verbindungsbereich (10) beginnt, eine alternative Entwicklung aufweist, deren Ansicht sinusförmig (91, 92) oder sägezahnförmig ist.

12. Dämpfungsvorrichtung nach einem der Ansprüche 1 bis 11, dadurch gekennzeichnet, daß der ringförmige Hauptbereich (20) Hindernisse in Form von Schikanen, Gittern oder faserigen Produkten enthält, die dazu dienen, die Dämpfung der akustischen Wellen zu erhöhen, ohne eine Unterbrechung der Kontinuität in dem Hohlraum zu erzeugen.

13. Dämpfungsvorrichtung nach einem der Ansprüche 1 bis 12, dadurch gekennzeichnet, daß sie mehrere akustische mitschwingende Hohlräume (11, 21; 12, 22) aufweist, die an unterschiedliche Schwingungen angepaßt sind, mit mehreren ringförmigen koaxialen Hauptbereichen (21, 22), die in ringförmigen Verbindungsbereichen (11, 12) münden, die wenigstens einen gemeinsamen Bereich aufweisen, der in der Brennkammer (2) mündet.

14. Dämpfungsvorrichtung nach einem der Ansprüche 1 bis 13, dadurch gekennzeichnet, daß sie mehrere akustische mitschwingende Hohlräume (10, 20; 11, 21; 12, 22) aufweist, die an unterschiedliche Schwingungen angepaßt sind, mit ringförmigen Verbindungsbereichen (10, 11, 12), die bei unterschiedlichen Höhen der Brennkammer (21) münden.

15. Dämpfungsvorrichtung nach einem der Ansprüche 1 bis 4 und 8 bis 12, dadurch gekennzeichnet, daß sie einen ringförmigen akustischen Hohlraum (10, 20) aufweist, dessen ringförmiger Hauptbereich (20) hinter dem Kragen (4) der Düse (1, 4, 3) angeordnet ist und einen Radius (R) aufweist, der im wesentlichen gleich dem Radius der Brennkammer (2) ist.

16. Dämpfungsvorrichtung nach Anspruch 15, dadurch gekennzeichnet, daß der ringförmige Verbindungsbereich (10) in der Brennkammer (2) auf der Höhe des oberen Viertels des den Kragen (4) der Düse (1, 4, 3) bildenden Bereichs mündet.

17. Dämpfungsvorrichtung nach Anspruch 5 und nach Anspruch 16, dadurch gekennzeichnet, daß der ringförmige Verbindungsbereich (10) durch einen kontinuierlichen Spalt gebildet wird, der zwischen einem unteren Haupteinsatz (5) und einem zweiten oberen Einsatz (6) ausgebildet ist, der den Kragen (4) der Düse (1, 4, 3) definiert, und daß der ringförmige Hauptbereich (20) zwischen der Außenseite des unteren Haupteinsatzes (5) und der Innenseite der Wand (1) angeordnet ist, die die Brennkammer (2) begrenzen, und auf der der untere Hauptabschnitt (5) und der obere Zweitabschnitt (6) angebracht sind.

18. Dämpfungsvorrichtung nach Anspruch 6 und nach Anspruch 16, dadurch gekennzeichnet, daß der ringförmige Verbindungsbereich (10) durch einen unterbrochenen Spalt gebildet wird, der am Umfang der Brennkammer (2) in einem einzigen einstückigen Einsatz (4) ausgebildet ist, der den Kragen (4) der Düse (1, 4, 3) definiert, und daß der ringförmige Hauptbereich (20) zwischen der Außenseite des einzigen einstückigen Einsatzes (5) und der Innenseite der Wand (1) angeordnet ist, die die Brennkammer (2) begrenzt, und auf der der einzige einstückige Einsatz (5) angebracht ist.

19. Dämpfungsvorrichtung nach einem der Ansprüche 1 bis 4 und 6 bis 16, verwendet bei einem Raketenantrieb, dessen Düse (1, 4, 3) durch parallele vertikale oder schraubenförmige Kühlkanäle (61) gekühlt wird, dadurch gekennzeichnet, daß sie einen zylindrischen Kranz aufweist, der um die Düse (1, 4, 3) angebracht ist, um den mitschwingenden akustischen Hohlraum (10, 20) zu definieren, und daß der ringförmige Verbindungsabschnitt (10) in der Brennkammer (2) über eine Reihe von Spalten (14) mündet, die in der Seitenwand der Düse (1, 4, 3) zwischen den Kühlkanälen (61) ausgebildet ist.

20. Dämpfungsvorrichtung nach einem der Ansprüche 1 bis 4 und 6 bis 16, verwendet bei einem Raketenantrieb, dessen Düse (1, 4, 3) ausgehend von geschweißten Kühlrohren (71) gebildet wird, dadurch gekennzeichnet, daß sie einen zylindrischen Kranz aufweist, der um die Düse (1, 4, 3) angebracht ist, um den mitschwingenden akustischen Hohlraum (10, 20) zu definieren, und daß der ringförmige Verbindungsbereich (10) in der Brennkammer (2) durch eine Reihe von Passagen (16) mündet, die durch Einschnürbereiche von Rohren (71) gebildet werden, die die Seitenwand der Düse (1, 4, 3) bilden.

21. Dämpfungsvorrichtung nach Anspruch 19 oder Anspruch 20, dadurch gekennzeichnet, daß der zylindrische zusammengesetzte Kranz aus mehreren durch Schweißen zusammengefügten Abschnitten gebildet wird.

22. Dämpfungsvorrichtung nach einem der Ansprüche 19 bis 21, dadurch gekennzeichnet, daß sie einen Kühlkreis (27 bis 29) des zusammengesetzten zylindrischen Kranzes aufweist, der den mitschwingenden akustischen Hohlraum (10, 20) bildet.

23. Dämpfungsvorrichtung nach einem der Ansprüche 1, 2 und 4 bis 12, dadurch gekennzeichnet, daß der ringförmige Hauptbereich (20) zwischen einer Verstärkung der Seitenwand (1) der Düse und einer Trennwand (122) ausgebildet ist, die auf der Seite der Brennkammer (2) angeordnet ist, daß Einrichtungen (121) vorgesehen sind, um mit Hilfe eines Ergol-Films die Trennwand (122) auf der Seite entgegengesetzt zu jener zu kühlen, die den ringförmigen Hauptbereich (20) begrenzt, und daß der ringförmige Verbindungsbereich (10) in einer Zone beginnt, die in dem unteren Bereich des ringförmigen Hauptbereichs (20) angeordnet ist.

24. Dämpfungsvorrichtung nach einem der Ansprüche 1 bis 13 und 15, 16, verwendet bei einem Raketenantrieb, dessen Düse (1, 4, 3) aus zwei durch Flansche verbundenen Bereichen (34, 44) gebildet wird, dadurch gekennzeichnet, daß der mitschwingende akustische Hohlraum (10, 20) durch Seitenwände (8, 9) begrenzt ist, die entsprechend einem jeden der beiden die Düse (1, 4, 3) bildenden Bereiche gehört.

25. Dämpfungsvorrichtung nach Anspruch 24, dadurch gekennzeichnet, daß der mitschwingende akustische Hohlraum (10, 20) mittels Kühlkanälen (32, 42) gekühlt wird, die entsprechend einem jeden der beiden die Düse (1, 4, 3) bildenden Bereiche angehören, und mit den Kühlkanälen der Seitenwand der Düse (1, 4, 3) in Verbindung gesetzt werden.
